# EUROPEAN PATENT SPECIFICATION

(11) **EP 2 480 425 B1**
(45) Date of publication and mention of the grant of the patent: **15.05.2019**
(21) Application number: 09849721.7
(22) Date of filing: 24.09.2009
(51) Int. Cl.: B60H 1/24

(54) **NATURAL AIR VENTILATION SYSTEM FOR A VEHICLE CAB**
UMGEBUNGSLUFT-BELÜFTUNGSSYSTEM FÜR EINE FAHRZEUGKABINE
SYSTÈME DE VENTILATION D'AIR NATUREL POUR UN HABITACLE DE VÉHICULE

(30) Priority: 25.09.2008 IN 2052MU2008
(43) Date of publication of application: 01.08.2012
(73) Proprietor: Mahindra Navistar Automotives Limited, Mumbai 400 018, Maharashtra (IN)
(72) Inventor: SRINIVASAN, Karthik, Mumbai 400 018 Maharashtra (IN); SHAH, Abhishek, Mumbai 400 018 Maharashtra (IN); GEJJI, Rohan, Mumbai 400 018 Maharashtra (IN); JHA, Dhruv, Kumar, Mumbai 400 018 Maharashtra (IN)
(74) Representative: Rössig, Rolf
(86) International application number: PCT/IN2009/000524
(87) International publication number: WO 2011/036672

(56) References cited:
- DE-A1- 3 304 188
- FR-A- 1 187 304
- US-A- 2 853 153
- US-A- 3 926 099
- US-A- 4 465 154
- US-A1- 6 004 202
- US-A1- 2008 085 672

## Description

### Technical Field of the invention:

The present invention relates to air ventilation system for occupant of the vehicle cabs. More particularly the invention relates to fresh air ventilation and removal of stagnant air from cabin of a vehicle using the suction power of engine.

### Background and Prior Art Search:

Vehicle cabins such as truck cabins are made to occupy at least two people - the driver and the co-driver and their belongings depending on the applications for which the vehicles are used. Since the trucks are also used on long hauls and in varying atmospheric conditions ranging from hot and humid to cold and dry, the comfort of the occupants is taken care by installing a HVAC unit or a blower system in the cabin. The HVAC system is made up of a blower, compressor, condenser, pump and an evaporator at the least and derives power either from the engine or from an external device like an electrical battery. This system thus puts an extra cost on the truck manufacturer and consequently on the customer. In other cases where the HVAC is not used, ventilation is brought about by blowing air into the cabin using a blower. But this alternative also incurs additional cost and uses engine power to run the blower.

In the Indian scenario manufacturers provide most of the cabins without a HVAC system to reduce the cost of the trucks. Even the blowers are also done away with and consequently there is no way of ensuring proper air flow into the cabin. The occupant comfort is hence largely neglected. The fresh air intake is either provided in the cabins through rudimentary ductwork or only cutouts on the front of the cabin. This approach provides little control on air flow into the cabin. The biggest disadvantage of the system is that there is no proper air circulation pattern. Also such systems don't ensure removal of stagnant air from the cabin.

Patent No. US 6004202 presents truck cab ventilation system which includes an air exhaust channel that extends from an upper channel portion adjacent the ceiling at the rear of the cab and through a lower channel portion and to an exhaust vent mounted adjacent the floor of the cab over an exit opening in such floor. An inlet vent in the front of the cab produces a positive pressure within the cab which causes flow-through ventilation air flow from the front to the rear of the cab when the truck is moving. As a result, air flows into the upper channel portion of the exhaust channel and out of the exhaust vent through the exit opening to the exterior of the cab. The exhaust vent includes flexible louvers of the elastomer which are held by gravity in a closed position and are moved into an open position when air flows out through the exhaust system.

Patent Nos. CA 2324687, US 6361428 and ZA 200006180A disclose vehicle ventilation system mounted to the upper portion of the exterior structure of a vehicle's occupant cabin. The components of the exterior structure of the occupant cabin define an opening through the exterior structure of the occupant cabin in the upper portion of the occupant cabin. A duct is mounted to the exterior structure of the occupant cabin and has a first end in fluid communication with the opening in the exterior structure of the occupant cabin. A second end of the duct is positioned below the first end of the duct and is open to and in fluid communication with the outside atmosphere. A fan is mounted to the exterior structure of the occupant cabin and is positioned such that when in operation it can be operated to move air through the opening in the exterior structure of the occupant cabin. The fan is controllable to change the rate and direction of the flow of air which it creates. A first rotary damper is mounted over the opening in the exterior structure of the occupant cabin and can be selectively opened or closed to allow or prevent air flow through the opening in the exterior structure of the occupant cabin. A second damper is mounted in a position such that it radially surrounds the impeller of the fan and can be used to control the flow of air radially outward from or radially inward toward the impeller of the fan.

Patent No. US 6361429 describes an automotive ventilation system comprising two blowers, a front mounted blower that pulls outside air in, and a rear mounted fan that exhausts interior air from the cabin space. By pulling and pushing in series, the speed of each blower is reduced, and the attendant blower noise is considerably reduced. In addition, a closed floor duct routes re circulated air from the rear to the front blower, eliminating the conventional open blower noise path to the vehicle interior in recirculation mode.

In this concept extra mechanical means are provided to take air inside the cabin and to exhaust it from the vehicle cabin involving more number of components.

Patent No. GB 2341676 states about vehicle air ventilation system. A cabin air intake system for a road vehicle has an air ventilation and climate control unit positioned below the windscreen of the vehicle for supplying conditioned ambient air through the dashboard to the passenger cabin of the vehicle. The cabin air intake system comprises two air intake openings positioned to draw ambient air from an upper section of the vehicle higher than the centre of the windscreen of the vehicle. Two air intake ducts are connected from the respective air intake openings to the air ventilation and climate control unit, and are routed along the respective A-pillars of the vehicle.

Patent No. US 6186886 describes vehicle cabin cooling system for capturing and exhausting heated boundary layer air from inner surfaces of solar heated windows. The system includes a cooling duct positioned proximate and above upper edges of one or more windows of a vehicle to exhaust hot air and at least one fan to draw hot air into the cooling duct.

In this air circulation system also exhaust fan is used to draw the hot air from the cabin. Air inlet vents are provided at the bottom of the vehicle which may take dirt inside the cab along with air.

Patent application Nos. EP 1623860, CN 1733517, FR 2873954, JP 2006046899 and US 2006/0026936 describe an air ventilation module for a vehicle cabin comprising of housing able to be installed in a chosen location in the cabin. The housing has air inlet and at least one air outlet and accommodating an air propulsion member comprising at least one motor and a rotary element for moving the air which is accommodated in an internal chamber of the housing. The module can also comprise a filtering element.

This system has external propulsion member for movement of the air and it is an add-on module to the vehicle cabin.

As disclosed in patent application No. US 2007/0249278, the cabin exhaust device ventilates vehicles provided with retractable windows and mounts on a portion of the vehicle, preferably on a door frame or in an opening between a window panel and a window frame. The cabin exhaust device comprises a squeegee and a ventilation panel having an air dam, a first portion, and a second portion, wherein the first and second portions are provided with angularly oriented apertures, thereby creating a vacuum on the vehicle's interior side. The first and second portions are outwardly convexed, thereby facilitating the creation of a pressure differential between the vehicle's interior and its exterior, thus forcing the air and other contaminants out from the vehicle's interior.

Patent application No. WO 2002/083441 discloses aeration system for excavators and industrial vehicle cabins comprising diffusers built into horizontal elements and vertical supports which delimit the transparent side surfaces of the cabin are designed to direct ventilation air flows in the vicinity of said transparent side surfaces, thus producing uniform ventilation close to the operator's body.

In this system air is forced to inside the cabin. The system is noisy does not disclose about the exit of inside air from the cabin.

Document FR 1 187 304 A discloses a natural air ventilation system according to the preamble of claim 1. Document DE 33 04 188 A1 discloses a further natural air ventilation system.

### Deficiencies of Prior Art:

- Most of the cab ventilation systems in prior art are provided with extra mechanical means such as blowers, exhaust fans for movement of the air inside the cabin.
- Most of the present day systems and prior art concepts are heavily dependent on the ram effect of air from the front of the cabin or an external power source.
- When the drivers roll up windows in dust / rainy / polluted conditions, there is little air flow into the cabin, thus causing discomfort/suffocation.
- These problems get aggravated when the vehicle is moving at low speeds and the ram effect of air is negligible.
- The biggest disadvantage of these systems is that there is no proper established air circulation pattern.
- The approach used in prior art techniques provides little or no control over air flow in the cabin and does not necessarily ensure removal of stagnant air from the cabin.

### Object of the Present Invention:

The main object of the invention is to provide fresh air ventilation system throughout the vehicle cabin by having cross cabin (front to back) air circulation pattern, especially when the windows are rolled up (when the truck is operating in mining areas/rainy season/city condition) even at low/zero speeds.

Another object of the invention is to provide a mechanism that ensures removal of stagnant air from the cabin to enhance occupant comfort, even at low/zero vehicle speed.

Yet another object of the invention is to provide an alternative solution to high cost HVAC and/ or blower units.

Still another object of the invention is to provide low cost and efficient fresh air ventilation system for vehicle cabins.

### Statement of present invention:

Accordingly present invention provides Natural air circulation system, for vehicle cabin with enclosed space having front, rear and side walls, comprising a scoop provided to said front side wall at out side and one or more air ducts inside the cabin connected to said scoop to allow out side air into the cabin; an exit vent is cut at rear wall of the said cabin; the said exit vent of rear wall is connected by duct means to snorkel having matching vent to form tight air passage; and snorkel out let is connected to intake manifold of engine through air fitter such a way that when the engine is running, the intake air to said manifold includes a portion of air inside the cabin space through the said exit vent of cabin and partly out side air through an opening on the said snorkel.

### Description of the Figures:

Figure 1 shows the schematic side view of the air ventilation system for vehicle cabin for one of its embodiments as disclosed herein.

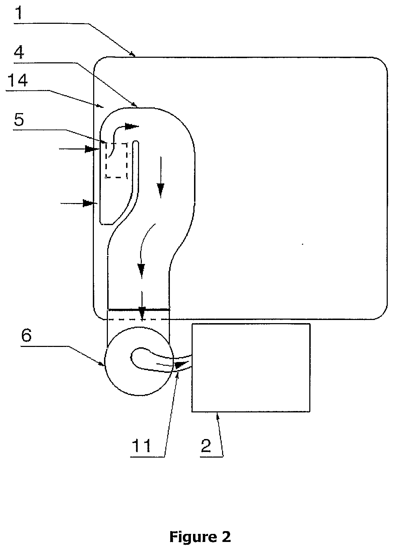

Figure 2 shows the rear view of air ventilation system with air flow through the snorkel in accordance with one of the embodiments of the present invention.

### Detailed Description of the Invention:

The foregoing objects of the invention are accomplished and the problems and shortcomings associated with prior art techniques and approaches are overcome by the present invention as described below in the preferred embodiment.

This invention is illustrated in the accompanying drawings, through out which like reference letters indicate corresponding parts in the various figures.

For better understanding of the description of the present invention, drawings are enclosed wherein one of the embodiments of the fresh air ventilation system for vehicle cab is shown.

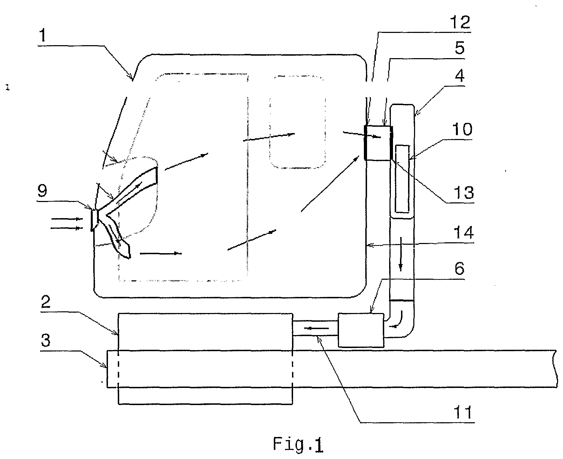

Referring to figure 1, vehicle cab (1) is provided with fresh air ventilation system comprising air scoops (9), air duct (8), exit vent (12), snorkel duct (5) and snorkel (4). Air scoops (9) and air ducts (8) are provided at the front part (7) of the vehicle cabin (1) to bring in fresh air inside the cabin. The area of the air scoop (9) and the air duct (8) is designed as per the requirement of air flow into the vehicle cabin (1). The positions of the air duct outlets (8) inside the vehicle cabin (1) are so placed as to provide air circulation patterns across the entire volume of the cabin (1). The air ducts (8) are provided with wire mesh filters (not shown in figure) to avoid the ingress of dust, dirt, other foreign material and like unwanted things. The air scoop (9) at the front of the vehicle cab (1) is designed such a way that upper edge of the scoop protrudes outside cab body (like a rain-shade in layman's language) which prevents direct entry of water into the duct. The lower edge of the scoop is at a certain angle which makes the water droplets, entered there by any means, to roll down outside, thus preventing entry of water into the duct (8).

The exit vent (12) is cut out on the rear wall (14) of the vehicle cabin (1). Another cut out vent (13) is provided on the snorkel (4) corresponding to the exit vent (12). A snorkel duct (5) connects the exit vent (12) on the rear wall (14) of the vehicle cab (1) and cut out vent (13) on the snorkel (4) to form an air tight passage. A wire mesh (not shown in figure) is provided at the exit vent (12) to prevent the entry of unwanted material such as pieces of paper or other such dirt that can go down the snorkel (4) and choke the air filter unit (6).

When the engine (2) is running, a suction pressure is created in the snorkel (4) which sucks in fresh air through it. Thus, the engine (2) sucks in air from outside atmosphere through opening (10) on the snorkel (4) and from the vehicle cabin (1) through exit vent (12) on the rear wall (14) of the vehicle cab (1). This air goes down the snorkel (4), gets filtered at the air filtration unit (6) and then goes to the air intake manifold of the engine (2) through a hose pipe (11). The air sucked in from the vehicle cabin (1) will be a portion of the total air sucked by the intake manifold. The amount of air sucked from the vehicle cab will depend on the ratio of cross sectional area of snorkel duct (5) to the snorkel opening area (10) on the snorkel (4). This operation will create a low pressure zone in the vehicle cabin (1). Air pressure difference inside the vehicle cabin (1) and ambient atmospheric air results in entry of fresh air into the vehicle cabin (1) through the air scoops (9) and air ducts (8) fitted at the front of the vehicle cabin (1). This will be assisted by the ram effect of the ambient air when the vehicle is in motion. This system works best when the windows are rolled up.

A simple flap mechanism / system shut off mechanism, is provided to close the exit vent (12) when the operation of the natural air ventilation mechanism is not required. A mechanism to regulate flow of air out of vehicle cabin (1) through exit vent (12) can also be developed using louvers that will vary cross-sectional area of exit vent (12) depending on the engine suction. This kind of a system can be coupled with a blower, thus ensuring even more effective air flow patterns.

Air scoop, air duct, snorkel duct and snorkel is made of any suitable material such as metal or fiber reinforced plastic or combination of thereof fulfilling the functional and technical requirements. Air scoop, air duct, snorkel duct and snorkel is having cross sectional shape of square, or rectangular, or circular, or pentagonal and like fulfilling the functional requirements.

This system also works for cabins which don't have any kind of inlet ducts, but only a cutout(s) on the cabin body to let in air into the cabin.

The foregoing objects of the invention are accomplished and the problems and shortcomings associated with prior art techniques and approaches are overcome by the present invention described in the present embodiment.

Detailed descriptions of the preferred embodiment are provided herein; however, it is to be understood that the present invention may be embodied in various forms. Therefore, specific details disclosed herein are not to be interpreted as limiting, but rather as a basis for the claims and as a representative basis for teaching one skilled in the art to employ the present invention in virtually and appropriately detailed system, structure or matter.

The embodiments of the invention as described above and the methods disclosed herein will suggest further modification and alterations to those skilled in the art. Such further modifications and alterations may be made without departing from the scope of the invention; which is defined by the scope of the following claims.

### Advantages of the Present Invention:

- The system provides air ventilation even at standstill / low vehicle speeds and even in the absence of rammed air into the cabin.
- The system eliminates consumption of power from the engine or electrical battery storage for vehicle cabin ventilation.
- The system removes stagnant air from the cabin and provides established air circulation patterns.
- It is extremely low cost solution for air ventilation of vehicle cabs.
- Replacement cost of the system is low.
- The system is easy to maintain and service.

## Claims

1. Natural air vehicle cab ventilation system comprising a,
- a vehicle cab (1) forming an enclosed space having front, rear (14), and sidewalls,
- said vehicle cab ventilation system comprising a scoop (9) provided to said front wall at out side and one or more air ducts inside the cabin (1) connected to said scoop (9) to allow out side air to enter into the cabin (1),
**characterized in that** an exit vent (12) is cut at rear wall (14) of said cabin (1); said exit vent (12) of rear wall is connected by duct means (5) to a snorkel (4) having a matching vent (12) to form tight air passage; and outlet of the snorkel is connected to an intake manifold of an engine through air filter (6) such a way that when the engine is running, the intake air to said manifold includes a portion of air inside the cabin space through the said exit vent (12) of cabin (1) and partly out side air through an opening on the said snorkel (4).

2. Natural air ventilation system for a vehicle cab as claimed in claim 1 wherein the upper edge of the said scoop (9) protrudes outside the cabin body to prevent direct entry of water into the duct and the lower edge of the scoop (9) maintained at a certain angle for rolling down droplets out side

3. Natural air ventilation system for a vehicle cab as claimed in claim 1 wherein the said air duct/ducts (8) is fitted with fine wire mesh filters to avoid the ingress of dust/foreign material.

4. Natural air ventilation system for a vehicle cab as claimed in claims 1 and 2 wherein the positions of the said air duct/ducts inside the cabin (1) is so placed as to provide air circulation patterns across the entire volume of the cabin.

5. Natural air ventilation system for a vehicle cab as claimed in claims 1 to 4 wherein the air circulation inside the cabin is dependant on the ratio of cross sectional area of the duct means to the snorkel opening area on the snorkel (4).

6. Natural air ventilation system for a vehicle cab as claimed in claim 3 wherein louvers is provided to said exit vent (12) of cabin to vary cross sectional area of said duct means to control the air circulation in side the vehicle cabin (1).

7. Natural air ventilation system for a vehicle cab as claimed in claim 3 wherein a simple flap mechanism /system shut off mechanism is provided to close the said exit vent to stop natural air ventilation.

8. Natural air ventilation system for a vehicle cab as claimed in claims 1 to 7 wherein the said exit vent is provided with wire mesh to prevent entry of unwanted material such as pieces of paper or other such dirt that may go down the snorkel and choke the air filter.

9. Natural air ventilation system for a vehicle cab as claimed above wherein air scoop, air duct, snorkel duct and snorkel is made of any suitable material such as metal or fiber reinforced plastic or combination of thereof fulfilling the functional and technical requirements.

10. Air ventilation system for vehicle cab as claimed in claims as above, wherein cross sectional shape of the air scoop (9), air duct, snorkel duct and snorkel (4) is of square, or rectangular, or circular, or pentagonal and like fulfilling the functional requirements.

## Patentansprüche

1. Umgebungsluft-Belüftungssystem für eine Fahrzeugkabine, umfassend
- eine Fahrzeugkabine (1), die einen geschlossenen Raum mit Vorder-, Hinter- (14) und Seitenwänden bildet,
- wobei das Fahrzeugkabinenlüftungssystem einen an der Vorderw and an der Außenseite vorgesehenen Abgriff (9) und einen oder mehrere Luftkanäle innerhalb der Kabine (1) aufweist, die mit dem Abgriff (9) verbunden sind, um den Eintritt von Außenluft in die Kabine zu ermöglichen (1),
**dadurch gekennzeichnet, dass** ein Luftaustritt (12) an der Rückwand (14) der Kabine (1) ausgeschnitten ist; der Luftaustritt (12) der Rückwand durch eine Kanaleinrichtung (5) mit einem Schnorchel (4) verbunden ist, der einen passenden Durchgang (12) aufweist, um einen dichten Luftdurchgang zu bilden; und der Auslass des Schnorchels durch einen Luftfilter (6) mit einem Ansaugkrümmer eines Motors derart verbunden ist, dass, wenn der Motor läuft, die Ansaugluft zu dem Krümmer einen Teil der Luft innerhalb des Kabinenraums durch die Auslassöffnung (12) der Kabine (1) und teilweise aus der Außenluft durch eine Öffnung an dem Schnorchel (4) enthält.

2. Umgebungsluft-Belüftungssystem für eine Fahrzeugkabine nach Anspruch 1, wobei die obere Kante des Abgriffs (9) aus dem Kabinenkörper herausragt, um einen direkten Eintritt von Wasser in den Kanal zu verhindern und die Unterkante des Abgriffs (9) einen bestimmten Winkel einnimmt, damit Tröpfchen nach außen ablaufen.

3. Umgebungsluft-Belüftungssystem für eine Fahrzeugkabine nach Anspruch 1, wobei der Luftkanal oder die Luftkanäle (8) mit feinen Drahtgeflechtfiltern versehen sind, um das Eindringen von Staub oder Fremdmaterial zu vermeiden.

4. Umgebungsluft-Belüftungssystem für eine Fahrzeugkabine nach den Ansprüchen 1 und 2, wobei die Positionen des Luftkanals oder der Luftkanäle innerhalb der Kabine (1) so angeordnet sind, dass sie Luftzirkulationsmuster über das gesamte Kabinenvolumen bereitstellen.

5. Umgebungsluft-Belüftungssystem für eine Fahrzeugkabine nach den Ansprüchen 1 bis 4, wobei die Luftzirkulation innerhalb der Kabine von dem Verhältnis der Querschnittsfläche der Kanaleinrichtung zu dem Schnorchelöffnungsbereich an dem Schnorchel (4) abhängt.

6. Umgebungsluft-Belüftungssystem für eine Fahrzeugkabine nach Anspruch 3, wobei Luftschlitze an der Austrittsöffnung (12) der Kabine vorgesehen sind, um die Querschnittsfläche der Kanaleinrichtung zu variieren, um die Luftzirkulation in der Seite der Fahrzeugkabine (1) zu steuern.

7. Umgebungsluft-Belüftungssystem für eine Fahrzeugkabine nach Anspruch 3, wobei ein einfacher Klappenmechanismus oder Systemabschaltmechanismus vorgesehen ist, um die Austrittsöffnung zu schließen, um eine natürliche Luftventilation zu stoppen.

8. Umgebungsluft-Belüftungssystem für eine Fahrzeugkabine nach den Ansprüchen 1 bis 7, wobei die Austrittsöffnung mit einem Drahtgeflecht versehen ist, um den Eintritt von unerwünschtem Material, wie z. B. Papierstücken oder anderem Schmutz, der den Schnorchel hinunterlaufen kann, zu verhindern der Luftfilter.

9. Umgebungsluft-Belüftungssystem für eine Fahrzeugkabine, wie oben beansprucht, wobei die Lufthutze, der Luftkanal, der Schnorchelkanal und der Schnorchel aus einem geeigneten Material wie Metall oder faserverstärktem Kunststoff oder einer Kombination hiervor hergestellt sind, die die funktionellen und technischen Anforderungen erfüllen.

10. Umgebungsluft-Belüftungssystem für eine Fahrzeugkabine nach den vorstehender Ansprüchen, wobei die Querschnittsform des Abgriffs (9), des Luftkanals, des Schnorchelkanals und des Schnorchels (4) quadratisch oder rechteckig oder kreisförmig oder fünfeckig ist entsprechend der funktionalen Anforderungen.

## Revendications

1. Système de ventilation d'air naturel pour une cabine de véhicule, comprenant:
- une cabine de véhicule (1) formant un espace clos comportant des parois avant, arrière (14) et latérales,
- ledit système de ventilation de cabine de véhicule comprenant une écope (9) disposée sur ladite paroi avant à l'extérieur et un ou plusieurs conduits d'air à l'intérieur de la cabine (1) reliés à ladite écope (9) pour permettre à l'air extérieur d'entrer dans la cabine (1),
**caractérisé en ce qu'**un évent de sortie (12) est découpé au niveau de la paroi arrière (14) de ladite cabine (1); ledit évent de sortie (12) de la paroi arrière est relié par un moyen de conduit (5) à un tuba (4) ayant un évent (12) correspondant pour former un passage d'air étroit; et la sortie du tuba est reliée à un collecteur d'admission d'un moteur par un filtre à air (6) de telle manière que, lorsque le moteur tourne, l'air d'admission audit collecteur comprend une partie d'air à l'intérieur de l'espace de cabine par ledit évent (12) de la cabine (1) et de l'air latéral partiellement sorti par une ouverture sur ledit tuba (4).

2. Système de ventilation à air naturel pour une cabine de véhicule selon la revendication 1, dans lequel le bord supérieur de ladite écope (9) fait saillie à l'extérieur du corps de la cabine pour empêcher l'entrée directe de l'eau dans le conduit et le bord inférieur de la pelle (9). maintenu à un certain angle pour rouler les gouttelettes sur le côté.

3. Système de ventilation à air naturel pour une cabine de véhicule selon la revendication 1, dans lequel ledit conduit / conduit d'air (8) est équipé de filtres à treillis métallique fin pour éviter la pénétration de poussière / de corps étranger.

4. Système de ventilation à air naturel pour une cabine de véhicule selon les revendications 1 et 2, dans lequel les positions dudit conduit d'air à l'intérieur de la cabine (1) sont placées de manière à assurer des configurations de circulation d'air sur tout le volume de la cabine.

5. Système de ventilation à air naturel pour une cabine de véhicule selon les revendications 1 à 4, dans lequel la circulation d'air à l'intérieur de la cabine dépend du rapport entre la section transversale du conduit et la zone d'ouverture du tuba (4).

6. Système de ventilation à air naturel pour une cabine de véhicule selon la revendication 3, dans lequel des ouïes sont prévues sur ledit évent de sortie (12) de la cabine pour varier la section transversale dudit conduit afin de contrôler la circulation de l'air dans la cabine du véhicule (1).

7. Système de ventilation à air naturel pour une cabine de véhicule selon la revendication 3, dans lequel un mécanisme d'arrêt à mécanisme à volets / système simple est prévu pour fermer ledit évent pour arrêter la ventilation naturelle de l'air.

8. Système de ventilation à air naturel pour une cabine de véhicule selon les revendications 1 à 7, dans lequel ledit évent de sortie est pourvu d'un treillis métallique pour empêcher la pénétration de matériaux indésirables tels que des morceaux de papier ou autres saletés susceptibles de le filtre à air

9. Système de ventilation à air naturel pour une cabine de véhicule tel que revendiqué ci-dessus, dans lequel la prise d'air, le conduit d'air, le conduit de tuba et le tuba sont faits de tout matériau approprié tel que du plastique

10. Système de ventilation d'air pour une cabine de véhicule selon les revendications ci-dessus, dans lequel la forme en coupe transversale de l'écope d'air (9), du conduit d'air, du conduit de tuba et du tuba (4) est carrée ou rectangulaire ou circulaire comme répondre aux exigences fonctionnelles.
